# EUROPEAN PATENT SPECIFICATION

(11) **EP 3 252 363 B1**
(45) Date of publication and mention of the grant of the patent: **05.08.2020**
(21) Application number: 17173177.1
(22) Date of filing: 29.05.2017
(51) Int. Cl.: F16L 19/025, F16L 19/02, F28D 7/10, F28D 7/16

(54) **COUPLING ARRANGEMENT FOR CONNECTING TWO PIPE SECTIONS**
KUPPLUNGSANORDNUNG ZUM VERBINDEN ZWEIER ROHRABSCHNITTE
AGENCEMENT D'ACCOUPLEMENT POUR RELIER DEUX SECTIONS DE TUYAU

(30) Priority: 30.05.2016 EP 16171857
(43) Date of publication of application: 06.12.2017
(73) Proprietor: Tetra Laval Holdings & Finance S.A., 1009 Pully (CH)
(72) Inventor: Larsson, Peter, 227 62 Lund (SE); STRÖM, Pär, 237 33 Bjärred (SE)
(74) Representative: Tetra Pak - Patent Attorneys SE

(56) References cited:
- EP-A2- 0 931 967
- WO-A1-2014/118047
- DE-A1- 2 910 684
- DE-A1- 4 201 535

## Description

### Technical Field

The invention relates to a coupling arrangement that has two pipe sections with two radial flanges. The radial flanges are pressed towards each other by an internally threaded connection element that is screwed onto external threads of one of the flanges. The coupling arrangement is typically a sanitary coupling arrangement.

### Background Art

Today many processing industries exist where a fluid is treated and processed in a processing system. The processing system typically has a fluid line that is made up of various components that are connected to each other as needed for transporting, processing and storing the fluid in one or more processing steps. The components in the fluid line include different types of pipe elements, pumps, valves, tanks and apparatuses and equipment that are needed for giving the fluid a desired treatment or property. The processing system often includes supporting systems that directly or indirectly may be connected to the fluid line, such as cleaning systems or heat transferring systems, which generally include their own set of components that also transport some kind of fluid along a fluid line.

Thus, there are often several different fluid lines of which each includes a number of different components that must be connected to each other. It is important that these connections are leak proof, secure, reliable and that they fulfill the requirements of the processing system they are part of. To accomplish such connections many different coupling arrangements have been proposed. Which type of coupling arrangement is most suitable for a fluid line is very dependent on the processing system that the fluid line is part of, since the operational conditions, properties and requirements etc. for the fluid line and the processed fluid vary greatly. Cost is also an important factor when selecting a most suitable coupling arrangement.

As a result coupling arrangements are often selected and as well as developed uniquely for different kinds of processing systems. One type of processing systems are those that process food that in one or all stages has a fluid form, such as dairy products, beverages, sauces, vegetable oils, tomato based food products etc. The hygienic requirements for coupling arrangements in food processing systems are very strict, while they still should be able to handle certain pressures and temperature levels.

Today a number of coupling arrangements exist that successfully connect components in a food processing system. Even though such coupling arrangements are leak proof, safe and fulfill most sanitary requirements, they do not appear to fulfill the requirements of some more demanding food processing methods that are used. Thus, there is a need for a new coupling arrangement that may be used for food processing systems, that is durable, leak proof and fulfils sanitary requirements while still keeping manufacturing costs at a reasonable level.

Coupling arrangements used in other industries are reflected by patent documents DE2910684A1, EP0931967A2 and DE4201535A1.

### Summary

It is an object of the invention to at least partly overcome one or more of the above-identified limitations of the prior art. In particular, it is an object to provide a coupling arrangement that is durable and that may be applied in a sanitary environment, such as in a fluid food processing system.

To solve these objects a coupling arrangement according to claim 1 is provided.

The coupling arrangement is advantageous by virtue of the transition sections that provide for an improved capability to withstand increased pressure levels at sanitary conditions. At the same time the coupling arrangement is relatively simple in its design, which allows for a relatively low manufacturing cost.

According to another aspect a tubular heat exchanger is provided, which comprises a coupling arrangement as described above. The coupling arrangement for the tubular heat exchanger may include any feature of a coupling arrangement described herein. The tubular heat exchanger has also: a first tube for a liquid food product; a second tube that receives the liquid food product from the first tube; a third tube that receives the liquid food product from the second tube; and a fourth tube for a heating media. The fourth tube is arranged to transfer heat from the heating media to the liquid food product in the second tube, and the third tube is arranged to transfer heat from a warmer part of the liquid food product in the third tube to a colder part of the liquid food product in the first tube. The coupling arrangement connects at least two sections of any of the first, second, third and fourth set of tubes. In one embodiment of the heat exchanger the first and third tubes may be omitted.

In this context, a "tube" may be referred to as a pipe. Each of the tubes may comprise one or more different sections that are connected to each other to form the tube. The coupling arrangement may connect two sections of the same tube to each other, such as two sections of the third tube, or it may connect two sections of different tubes to each other, such as a section of the second tube and a section of the third tube.

The tubes of the tubular heat exchanger form part of a fluid line in a fluid food processing system. A part of the fluid line is formed in the tubular heat exchanger and processes the fluid food, typically by heat treating the food for killing micro-organisms. The tubular heat exchanger is advantageous in that it is possible to operate it at increased pressure levels, since the coupling arrangement improves the pressure handling capability of one or more sections of the tubes.

According to another aspect a method of transferring a fluid food product through a coupling arrangement as described above is provided. The method comprises:
providing a first pipe section that has a first radial flange that is located on the first pipe section, the first flange comprising external threads, a first transition section being located where the first pipe section transitions into the first flange, the first transition section having a gradually increasing thickness in a direction from the first pipe section towards the first flange;
providing a second pipe section that has a second radial flange that is located on the second pipe section and facing the first flange, the second flange comprising an engagement surface, a second transition section being located where the second pipe section transitions into the second flange, the second transition section having a gradually increasing thickness in a direction from the second pipe section towards the second flange;
screwing a connection element onto the first flange, the connection element having internal threads that engages the external threads of the first flange, and an internal flange that engages the engagement surface of the second flange, the connection element thereby pressing the second flange towards the first flange; and
supplying the fluid food product to the first pipe section, past the radial flanges and into the second pipe section at a pressure of at least 20 bar and a temperature of at least 110 °C.

The method is advantageous in that it provides for transferring a fluid food product under high pressure, heat treating conditions, while still assuring that the coupling arrangement is leak proof, safe and fulfills sanitary requirements.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a perspective view of a coupling arrangement,
Fig. 2 is a cross-sectional view of the coupling arrangement of Fig. 1,
Fig. 3 is a cross-sectional view of a first pipe section and a first radial flange that are part of the coupling arrangement of Fig. 1,
Fig. 4 is a cross-sectional view of a second pipe section and a second radial flange that are part of the coupling arrangement of Fig. 1,
Fig. 5 is a cross-sectional view of a connection element that is part of the coupling arrangement of Fig. 1,
Fig. 6 is a perspective view of a tubular heat exchanger that includes a coupling arrangement of the type shown in Fig. 1, and
Fig. 7 is a flow chart that illustrates a method of transferring a fluid food product through a coupling arrangement of the type shown in Fig. 1.

### Detailed description

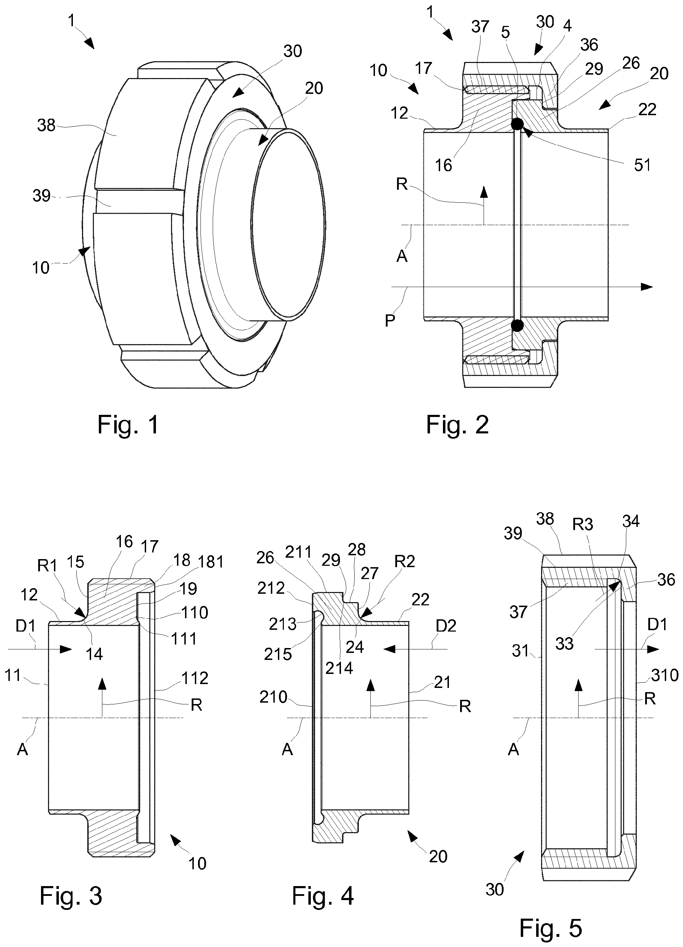

With reference to Figs 1 and 2 a coupling arrangement 1 is illustrated. The coupling arrangement 1 has a first pipe section 12 and a second pipe section 22. A first radial flange 16 is located at an end of the first pipe section 12, and a second radial flange 26 is located at an end of the second pipe section 22. The first pipe section 12 and the first radial flange 16 are typically formed in one piece and may be referred to as a first connection component 10. The second pipe section 22 and the second radial flange 26 are typically also formed in one piece and may be referred to as a second connection component 20.

The first radial flange 16 has external threads 17 and the two radial flanges 16, 26 faces and abuts each other when the first connection component 10 and the second connection component 20 are connected to each other. The connection is accomplished by a connection element 30 that has internal threads 37 that match the external threads 17 of the first flange 16. The connection element 30 has also an internal flange 36 that extends inwardly towards a center of the connection element 30. The internal flange 36 abuts and thereby engages an engagement surface 29 of the second flange 26 when the connection element 30 is screwed onto the first flange 16.

The connection element 30 is screwed onto the first radial flange 16 at the end of the first radial flange 16 that faces the second radial flange 26. The connection element 30 then presses the second radial flange 26 towards the first radial flange 16, by virtue of its internal flange 36 that acts on the second radial flange 26. When the connection element 30 is screwed tight onto the first radial flange 16 the applied pressure on the engagement surface 29 brings the radial flanges 16, 26 into close and sealing contact with each other. To accomplish a leak proof seal a gasket 5 is arranged between the radial flanges 16, 26. The gasket 5 may have the form of an O-ring that is made of a conventional, elastomeric material that is suitable for food applications.

The connection element 30 has an outer, peripheral surface 38 that is provided with a numbers of grooves 39. The grooves 39 serve as grips for a tool (not shown) that may be used for screwing and tightening the connection element 30 to the first radial flange 16.

The first pipe section 12, the first radial flange 16, the second pipe section 22, the second radial flange 26 and the connection element 30 each has a symmetrical, circular shape and a respective radial size that is measured in the radial direction R. An axis A extends through a center of each of the pipe sections 12, 22, the flanges 16, 26 and the connection element 30. The pipe sections 12, 22, the flanges 16, 26 and the connection element 30 are symmetrical about the axis A.

The coupling arrangement 1 may be made of stainless steel and has no grooves or crevices where contaminations remain after the coupling arrangement 1 has been properly cleaned. The coupling arrangement 1 is typically a sanitary coupling arrangement that is arranged for transferring a fluid food product P from the first pipe section 12 to the second pipe section 22, or in the opposite direction. The cleaning may be a conventional cleaning-in-place technique that is suitable for the application area and the food product for which the coupling arrangement 1 is used.

With reference to Fig. 3, the coupling arrangement 1 has a first transition section 14 that is located where the first pipe section 12 transitions into the first radial flange 16. The first transition section 14 has a gradually increasing thickness in a direction D1 from the first pipe section 12 towards the first radial flange 16. This means that the first transition section 14 has a radial extension that becomes continuously larger (thicker in the radial direction R), as seen along the direction D1 from the first pipe section 12 to the first radial flange 16. The first transition section 14 may comprise a radius R1 of at least 2 mm, or even a radius R1 of 6 mm to 10 mm. This makes the first connection component 10 more durable, both due to an even stress distribution and due to the volume of the material that forms the first transition section 14.

As may be seen, the first pipe section 12 has an external, peripheral surface that is parallel to the axis A. This peripheral surface meets the first transition section 14 and the surface of the first transition section 14 gradually changes direction until it meets a peripheral surface 15 of the first radial flange 16. This peripheral surface 15 of the first radial flange 16 is parallel to the radial direction R. As a result the first transition section 14 comprises a peripheral surface that has the form of a circular arc that with the radius R1 and subtending an angle of 90°, alternatively subtending an angle of 87° to 93°. When the radius R1 subtends an angle that is different from 90°, then the peripheral surface 15 is typically slanted relative the radial direction R.

With further reference to Fig. 4, the coupling arrangement 1 has a second transition section 24 that is located where the second pipe section 22 transitions into the second radial flange 26. The second transition section 24 has a gradually increasing thickness in a direction D2 from the second pipe section 22 towards the second radial flange 26. This means that the second transition section 24 has a radial extension that becomes continuously larger (thicker in the radial direction R), as seen along the direction D2 from the second pipe section 22 to the second radial flange 26. The second transition section 24 may comprise a radius R2 of at least 2 mm, or even a radius R2 of 6 mm to 10 mm. This makes the second connection component 20 more durable, both due to an even stress distribution and due to the volume of the material that forms the second transition section 24.

The second pipe section 22 has an external peripheral surface that is parallel to the axis A. This peripheral surface meets the second transition section 24 and the surface of the second transition section 24 gradually changes direction until it meets a peripheral surface 27 of the second radial flange 26. This peripheral surface 27 of the second radial flange 26 is parallel to the radial direction R. As a result the second transition section 24 comprises a peripheral surface that has the form of a circular arc with the radius R2 and subtending an angle of 90°, alternatively subtending an angle of 87° to 93°. When the radius R2 subtends an angle that is different from 90°, then the peripheral surface 27 is typically slanted relative the radial direction R.

The first radial flange 16 has a first side 112 that faces the second connection component 20 and a second side 11 that is opposite the first side 112. The second side 11 may be welded or be attached by another suitable means to any pipe or component that the coupling arrangement 1 shall connect. The second radial flange 26 has in turn a first side 210 that faces the first connection component 10 and a second side 21 that is opposite its first side 210. The second side 21 of the second connection component 20 may be welded or be attached by another suitable means to any pipe or component that shall be connected to a pipe or component that is attached to the first connection component 10.

The first radial flange 16 has an abutment surface 19 and that abuts an abutment surface 212 of the second flange 26, when the two connection components 10, 20 are arranged towards each other when they shall be connected. The abutment surfaces 19, 212 limit how close the radial flanges 16, 26 may be arranged, i.e. when the surfaces 19, 212 are in contact with each other the connection element 30 cannot press them more closer together, but only increase the force by which they are pressed together.

A groove 110 is located adjacent the abutment surface 19 of the first radial flange 16, on an inner side of the abutment surface 19 as seen in the radial direction R. A protruding rim 111 is located next to the groove 110, on an inner side of the groove 110 as seen in the radial direction R. The second radial flange 26 has a corresponding groove 213 that is located adjacent the abutment surface 212 of the second radial flange 26, on an inner side of the abutment surface 212 as seen in the radial direction R. A protruding rim 215 is located next to the groove 213, on an inner side of the groove 213 as seen in the radial direction R.

The grooves 110, 213 in the flanges 16, 26 together form a groove 51 (see Fig. 2) for the gasket 5. A predetermined pre-compression of the gasket 5 is obtained since the abutment surfaces 19, 212 limit how close the radial flanges 16, 26 may be located to each other. This typically increases the lifetime of the gasket.

The first flange 16 has a protrusion 18 that extends towards and at least partially over the second flange 26, when the first flange 16 and the second flange 26 are connected to each other. This assists in guiding and fixing the connection components 10, 20 relative each other in the radial direction R. The protrusion 18 then encloses at least a part of a peripheral surface 211 (a periphery) of the second radial flange 26. This peripheral surface 211 is the surface of the second radial flange 26 that is most distant from the axis A, and is typically parallel to the axis A.

Thus, the first flange 16 comprises a protrusion 18 that extends towards and at least partially over a periphery 211 of the second flange 26, said periphery 211 of the second flange 26 being a periphery of the second flange 26 that is most distant from the center axis A that extends through the pipe sections 12, 22 and the flanges 16, 26. This means that the second flange 26 comprises no other part or section that is more distant from the axis A than said periphery 211, as seen in a direction transverse to the axis A (i.e. as seen in the radial direction R). This makes it easier for an operator to connect the connection components 10, 20 to each other.

The protrusion 18 may comprise a surface 181 that extends in the radial direction R of the first flange 16, in parallel to said radial direction R, said surface 181 facing the connection element 30. The surface 181 is a free end which has no contact with any other part of the coupling arrangement 1. This releases any potential mechanical tension that otherwise might occur in the protrusion 18.

With reference to Fig. 5 a third transition section 34 is located where the connection element 30 transitions into the internal flange 36. The internal flange 36 is internal in the sense that it extends inwardly in the radial direction R, towards the axis A. To engage the engagement surface 29 of the second radial flange 26 the internal flange 36 has an inner diameter that is smaller than an outer diameter of the engagement surface 29. Typically, the difference in the diameters may be at least 3 mm, which means that the engagement surface 29 has radial extension of at least 1,5 mm that is in contact with the internal flange 36. The internal flange 36 has an engagement surface 33 that faces and abuts the engagement surface 29 of the second radial flange 26, and it is this surface 33 that provides the force on the second connection component 20 that presses it towards the first connection component 10.

The connection element 30 has a first side 31 that is oriented towards the first connection component 10 and has a second side 310 that is opposite its first side 31. When the coupling arrangement 1 is properly coupled, then the connection element 30 is arranged over the second connection component 20 by moving the connection element 30 with its first side 31 over the second connection component 20. The first connection component 10 is arranged towards the second connection component 20 as shown in Fig. 2 and the internal threads 37 of the connection element 30 meets the external threads 17 of the first radial flange 16. The coupling is then accomplished by screwing the connection element 30 onto the first connection component 10 until a tight fit between the first connection component 10 and the second connection component 20 is accomplished.

The third transition section 34 has a gradually increasing thickness in a direction D1 from the connection element 30 towards the internal flange 36. This means that the third transition section 34 has a radial extension that becomes continuously larger (thicker in the radial direction R), as seen along the direction D1 from the connection element 30 to the internal flange 36. Alternatively, it may be said that the third transition section 34 has a gradually increasing thickness in a direction D1 from the internal threads 37 towards the internal flange 36, which means that the third transition section 34 has a radial extension that becomes continuously larger along the direction D1 from the internal threads 37 towards the internal flange 36.

The third transition section 34 may comprise a radius R3 of at least 0,7 mm, or even a radius R3 of 1 mm to 4 mm. This makes the connection element 30 more durable, both due to an even stress distribution and due to the volume of the material that forms the third transition section 34.

Turning back to Fig. 4, the second flange 26 has a radial cut-out 28 that forms the engagement surface 29. A fourth transition section 214 is located where the radial cut-out 28 transitions into the peripheral surface 211 of the second radial flange 26. The fourth transition section 214 has a gradually increasing thickness in a direction D2 from the second pipe section 22 towards the first side 210 of the second connection component 20. This means that the fourth transition section 214 has a radial extension that becomes continuously larger along the direction D2 from the first pipe section 12 towards the first side 210 of the second connection component 20. The fourth transition section 214 may comprise a radius of at least 0,5 mm, or even a radius of 0,8 mm to 1,5 mm. This makes the second connection component 20 more durable.

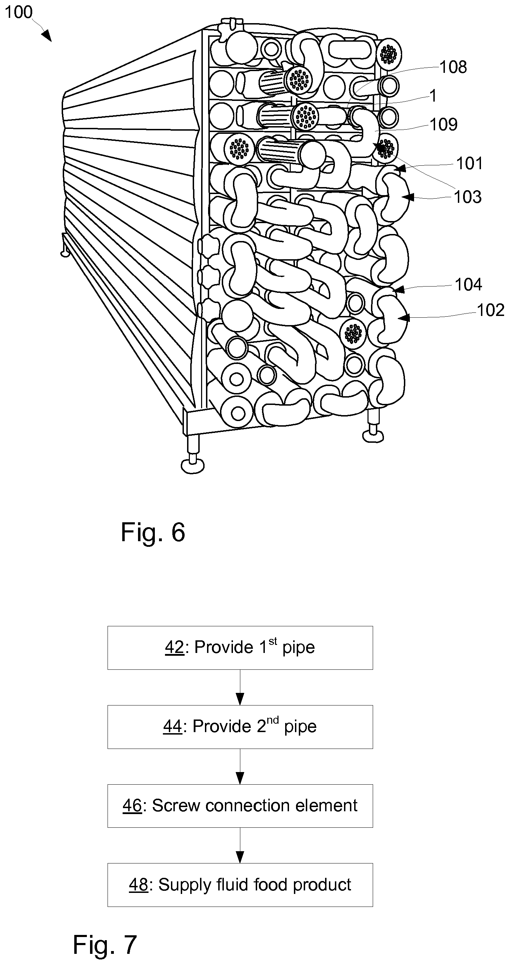

With reference to Fig. 6 a tubular heat exchanger 100 that includes the coupling arrangement 1 is shown. The tubular heat exchanger 100 may be a tubular heat exchanger of the kind named Tetra Spiraflo™, marketed and sold by the company Tetra Pak.

The tubular heat exchanger 100 has a first tube 101 for a liquid food product, a second tube 102 that receives the liquid food product from the first tube 101, a third tube 103 that receives the liquid food product from the second tube 102, and a fourth tube 104 for a heating media. The fourth tube 104 is arranged to transfer heat from the heating media to the liquid food product in the second tube 102. The third tube 103 is arranged to transfer heat to from a warmer part of the liquid food product that flows in the third tube 103 to a colder part of the liquid food product in the first tube 101. The coupling arrangement 1 connects at least two sections 108, 109 of any of the first, second, third and fourth set of tubes 101, 102, 103, 104. The tubular heat exchanger 100 is of a type that reuses heat from the liquid food product.

The tubular heat exchanger 100 may have different configurations of the tubes with setups where a different number of tubes may be used for different applications. Each of the tubes 101-104 may be made of one or more sections, where such one or more sections form the tube. Different sections of one of the tubes, such different sections 108, 109 of the third tube 103, may be joined by the coupling arrangement 1. The different tubes 101-104 may also be joined to each other by the coupling arrangement 1. The tubular heat exchanger 100 operate under conditions where the coupling arrangement 1 have shown particularly advantageous, in particular when considering sanitary- and pressure handling aspects as well as when considering the total cost of the tubular heat exchanger 100.

Another embodiment of the tubular heat exchanger is possible, where it has a coupling arrangement, a food conveying tube 102 for a liquid food product and a media conveying tube 104 for a heating media. The media conveying tube 104 transfers heat from the heating media to the liquid food product in the food conveying tube 102. The coupling arrangement 1 connects at least two sections 108, 109 of any of the food conveying and media conveying tubes 102, 104. This tubular heat exchanger corresponds to the previously described heat exchanger, with the difference that the heat from the liquid food product is not reused, since the tubes 101, 103 are omitted.

With reference to Fig. 7 a method of transferring the fluid food product P through the coupling arrangement 1 is shown. The method comprises providing 42 the first pipe section 12 that has the first radial flange 16 that is located on the first pipe section 12, and providing 44 the second pipe section 22 that has the second radial flange 26 that is located on the second pipe section 22. The providing 42, 44 of the pipe sections 12, 22 is accomplished by conventional manufacturing techniques that gives the pipe sections 12, 22 and flanges 16, 26 the features and forms described in connection with Figs 1-5, and by bringing the connection components 10, 20 towards each other until the abutment surfaces 19, 212 of the flanges 16, 26 contact each other. The providing 42, 44 of the pipe sections 12, 22 typically includes that their ends 11, 21 opposite the flanges 16, 26 are joined with components (not shown) that are part of a fluid food processing system.

Next the connection element 30 is screwed 46 onto the first flange 16, such that the connection element 30 thereby presses the second flange 26 towards the first flange 16 for sealing the coupling arrangement 1. This may be done manually. Thereafter the fluid food product P is supplied 48 to the first pipe section 12, past the radial flanges 16, 26 and into the second pipe section 22, at a pressure of at least 25 bar and a temperature of at least 110 °C. The use of this pressure level and temperature is provided for by the coupling arrangement 1, and is advantageous e.g. in that sanitary requirements may be fulfilled. Alternatively, the pressure may be at least 30 bar, at least 35 bar or at least 40 bar, while the temperature is at least 110 °C.

Each of the first pipe section 12 and the second pipe section 22 may have a optimized diameter and a thickness that enables supplying the fluid food product P at a specific pressure level. Specifically, the diameter, the thickness and the pressure may be selected from any the following groups of values:
- a diameter of 20 mm to 25 mm, a thickness of 1,2 ± 0,5 mm and a pressure of at least 95 bar or at least 110 bar,
- a diameter of 25 mm to 38 mm, a thickness of 1,5 ± 0,5 mm and a pressure of at least 65 bar or at least 80 bar,
- a diameter of 38 mm to 51 mm, a thickness of 1,6 ± 0,5 mm and a pressure of at least 63 bar or at least 78 bar,
- a diameter of 51 mm to 63,5 mm, a thickness of 1,6 ± 0,5 mm and a pressure of at least 47 bar or at least 62 bar,
- a diameter of 63,5 mm to 76 mm, a thickness of 1,6 ± 0,5 mm and a pressure of at least 25 bar or at least 40 bar,
- a diameter of 76 mm to 101,6 mm, a thickness of 2,0 ± 0,5 mm and a pressure of at least 25 bar or at least 40 bar, and
- a diameter of 101,6 mm to 104 mm, a thickness of 2,0 ± 0,5 mm and a pressure of at least 25 bar or at least 40 bar.

For the groups above "± 0,5 mm" means that the thickness may have the given value within a range from 0,5 mm below the value to 0,5 mm above the value. For example, a thickness of 1,2 ± 0,5 mm means a thickness of 0,7 mm to 1,7 mm.

Thus, several different sizes and dimensions for the pipes 12, 22 may be accomplished by the coupling arrangement 1, while still allowing for relatively high pressure levels to be handled. From the description above of the coupling arrangement 1 it follows that, although various embodiments of the coupling arrangement 1 have been described and shown, the invention described herein is not restricted thereto, but may also be embodied in other ways within the scope of the subject-matter defined in the following claims.

## Claims

1. Coupling arrangement comprising
a first pipe section (12) and a first radial flange (16) that is located on the first pipe section (12), the first flange (16) comprising external threads (17),
a second pipe section (22) and a second radial flange (26) that is located on the second pipe section (22) and facing the first flange (16), the second flange (26) comprising an engagement surface (29), and
a connection element (30) that has
- internal threads (37) that engages the external threads (17) of the first flange (16), and
- an internal flange (36) that engages the engagement surface (29) of the second flange (26), the connection element (30) thereby pressing the second flange (26) towards the first flange (16) when the connection element (30) is screwed onto the first flange (16),
a first transition section (14) that is located where the first pipe section (12) transitions into the first flange (16), the first transition section (14) having a gradually increasing thickness in a direction from the first pipe section (12) towards the first flange (16), and
a second transition section (24) that is located where the second pipe section (12) transitions into the second flange (26), the second transition section (24) having a gradually increasing thickness in a direction from the second pipe section (22) towards the second flange (26), wherein
the first flange (16) comprises an abutment surface (19) that abuts an abutment surface (212) of the second flange (26), and
a gasket (5) is arranged in a groove (51) between the first flange (16) and the second flange (26), a predetermined pre-compression of the gasket (5) being obtained by the abutment between the abutment surfaces (19, 212) of the flanges (16, 26), when the first flange (16) and the second flange (26) are connected to each other, **characterized by**
a groove (110) located adjacent the abutment surface (19) of the first radial flange (16), on an inner side of the abutment surface (19) as seen in a radial direction (R), a protruding rim (111) being located next to the groove (110), on an inner side of the groove (110) as seen in the radial direction (R), the second radial flange (26) having a corresponding groove (213) that is located adjacent the abutment surface (212) of the second radial flange (26), on an inner side of the abutment surface (212) as seen in the radial direction (R), and a protruding rim (215) located next to the groove (213), on an inner side of the groove (213) as seen in the radial direction (R), wherein the groove (110) in the first radial flange (16) and the corresponding groove (213) in the second radial flange (26) together form the groove (51) for the gasket (5),
the first flange (16) comprises a protrusion (18) that extends towards and at least partially over a periphery (211) of the second flange (26), said periphery (211) of the second flange (26) being a periphery of the second flange (26) that is most distant from the center axis (A) that extends through the pipe sections (12, 22) and the flanges (16, 26), so that the second flange (26) comprises no other part or section that is more distant from the axis (A) than said periphery (211), as seen in the radial direction (R), and
the protrusion (18) comprises a surface (181) that extends in the radial direction (R) of the first flange (16), in parallel to said radial direction (R), said surface (181) facing the connection element (30) and being a free end which has no contact with any other part of the coupling arrangement (1) when the abutment surface (19) of the first flange (16) abuts the abutment surface (212) of the second flange (26).

2. Coupling arrangement according to claim 1, wherein the first transition section (14) comprises a radius (R1) of at least 2 mm.

3. Coupling arrangement according to claim 1 or 2, wherein the first transition section (14) comprises a radius (R1) of 6 mm to 10 mm.

4. Coupling arrangement according to any one of claims 1 - 3, wherein the second transition section (24) comprises a radius (R2) of at least 2 mm.

5. Coupling arrangement according to any one of claims 1 - 4, wherein the second transition section (24) comprises a radius (R2) of 6 mm to 10 mm.

6. Coupling arrangement according to any one of claims 1 - 5, wherein a third transition section (34) is located where the connection element (30) transitions into the internal flange (36), the third transition section (34) having a gradually increasing thickness in a direction from the internal threads (37) towards the internal flange (36).

7. Coupling arrangement according to claim 6, wherein the third transition section (34) comprises a radius (R3) of at least 0,7 mm.

8. Coupling arrangement according to claim 6 or 7, wherein the third transition section (34) comprises a radius (R3) of 1 mm to 4 mm.

9. Coupling arrangement according to claim 6, wherein the first transition section (14) comprises a radius (R1) of 7 mm to 9 mm, the second transition section (24) comprises a radius (R2) of 7 mm to 9 mm, and the third transition section (34) comprises a radius (R3) of 1,5 mm to 3,5 mm.

10. Coupling arrangement according to any one of claims 1 - 9, wherein the second flange (26) comprises a radial cut-out (28) that forms the engagement surface (29).

11. Coupling arrangement according to any one of claims 1 - 10, wherein the coupling arrangement is a sanitary coupling arrangement that is arranged for transferring a fluid food product (P) from one of the first pipe section (12) and the second pipe section (22) to the other one of the first pipe section (12) and the second pipe section (22).

12. Tubular heat exchanger comprising
a coupling arrangement (1) according to any one of claims 1-11,
a food conveying tube (102) for a liquid food product,
a media conveying tube (104) for a heating media, the media conveying tube (104) being arranged to transfer heat from the heating media to the liquid food product in the food conveying tube (102), wherein the coupling arrangement (1) connects at least two sections (108, 109) of any of the food conveying and media conveying tubes (102, 104).

13. Method of transferring a fluid food product (P) through a coupling arrangement (1) according to any one of claims 1-11 comprising
providing (42) a first pipe section (12) that has a first radial flange (16) that is located on the first pipe section (12), the first flange (16) comprising external threads (17), a first transition section (14) being located where the first pipe section (12) transitions into the first flange (16), the first transition section (14) having a gradually increasing thickness in a direction from the first pipe section (12) towards the first flange (16),
providing (44) a second pipe section (22) that has a second radial flange (26) that is located on the second pipe section (22) and facing the first flange (16), the second flange (26) comprising an engagement surface (29), a second transition section (24) being located where the second pipe section (12) transitions into the second flange (26), the second transition section (24) having a gradually increasing thickness in a direction from the second pipe section (22) towards the second flange (26),
screwing (46) a connection element (30) onto the first flange (16), the connection element (30) having internal threads (37) that engages the external threads (17) of the first flange (16), and an internal flange (36) that engages the engagement surface (29) of the second flange (26), the connection element (30) thereby pressing the second flange (26) towards the first flange (16), and
supplying (48) the fluid food product (P) at a pressure of at least 25 bar and a temperature of at least 110 °C to any of the first pipe section (12) and the second pipe section (22), past the radial flanges (16, 26) and into the other of the first pipe section (12) and the second pipe section (22).

14. Method according to claim 13, wherein each of the first pipe section (12) and the second pipe section (22) has a diameter and a thickness, and the fluid food product (P) is supplied at a pressure, the diameter, the thickness and the pressure being selected from any the following groups of values:
- a diameter of 20 mm to 25 mm, a thickness of 1,2 ± 0,5 mm and a pressure of at least 95 bar,
- a diameter of 25 mm to 38 mm, a thickness of 1,5 ± 0,5 mm and a pressure of at least 65 bar,
- a diameter of 38 mm to 51 mm, a thickness of 1,6 ± 0,5 mm and a pressure of at least 63 bar,
- a diameter of 51 mm to 63,5 mm, a thickness of 1,6 ± 0,5 mm and a pressure of at least 47 bar,
- a diameter of 63,5 mm to 76 mm, a thickness of 1,6 ± 0,5 mm and a pressure of at least 25 bar,
- a diameter of 76 mm to 101,6 mm, a thickness of 2,0 ± 0,5 mm and a pressure of at least 25 bar, and
- a diameter of 101,6 mm to 104 mm, a thickness of 2,0 ± 0,5 mm and a pressure of at least 25 bar.

## Patentansprüche

1. Kopplungsanordnung, umfassend
einen ersten Rohrabschnitt (12) und einen ersten radialen Flansch (16), der sich am ersten Rohrabschnitt (12) befindet, wobei der erste Flansch (16) ein Außengewinde (17) umfasst,
einen zweiten Rohrabschnitt (22) und einen zweiten radialen Flansch (26), der sich am zweiten Rohrabschnitt (22) befindet und dem ersten Flansch (16) zugewandt ist, wobei der zweite Flansch (26) eine Eingriffsfläche (29) umfasst, und
ein Verbindungselement (30), das Folgendes aufweist:
- ein Innengewinde (37), das mit dem Außengewinde (17) des ersten Flanschs (16) in Eingriff steht, und
- einen Innenflansch (36), der mit der Eingriffsfläche (29) des zweiten Flanschs (26) in Eingriff steht, wobei das Verbindungselement (30) dadurch den zweiten Flansch (26) in Richtung des ersten Flanschs (16) drückt, wenn das Verbindungselement (30) auf den ersten Flansch (16) aufgeschraubt wird,
einen ersten Übergangsabschnitt (14), der sich dort befindet, wo der erste Rohrabschnitt (12) in den ersten Flansch (16) übergeht, wobei der erste Übergangsabschnitt (14) in einer Richtung vom ersten Rohrabschnitt (12) zum ersten Flansch (16) eine allmählich zunehmende Dicke aufweist, und
einen zweiten Übergangsabschnitt (24), der sich dort befindet, wo der zweite Rohrabschnitt (12) in den zweiten Flansch (26) übergeht, wobei der zweite Übergangsabschnitt (24) in einer Richtung vom zweiten Rohrabschnitt (22) zum zweiten Flansch (26) eine allmählich zunehmende Dicke aufweist, wobei der erste Flansch (16) eine Anschlagfläche (19) umfasst, die an einer Anschlagfläche (212) des zweiten Flanschs (26) anliegt, und
eine Dichtung (5) in einer Nut (51) zwischen dem ersten Flansch (16) und dem zweiten Flansch (26) angeordnet ist, wobei eine vorbestimmte Vorkompression der Dichtung (5) durch den Anschlag zwischen den Anschlagflächen (19, 212) der Flansche (16, 26) erhalten wird, wenn der erste Flansch (16) und der zweite Flansch (26) miteinander verbunden sind,
**gekennzeichnet durch**
eine Nut (110), die sich angrenzend an die Anschlagfläche (19) des ersten radialen Flanschs (16) an einer Innenseite der Anschlagfläche (19), in einer radialen Richtung (R) gesehen, befindet, wobei sich neben der Nut (110) an einer Innenseite der Nut (110), in der radialen Richtung (R) gesehen, ein vorstehender Rand (111) befindet, wobei der zweite radiale Flansch (26) eine entsprechende Nut (213) aufweist, die sich angrenzend an die Anschlagfläche (212) des zweiten radialen Flanschs (26) an einer Innenseite der Anschlagfläche (212), in der radialen Richtung (R) gesehen, befindet, und wobei sich neben der Nut (213) an einer Innenseite der Nut (213), in der radialen Richtung (R) gesehen, ein vorstehender Rand (215) befindet,
wobei die Nut (110) im ersten radialen Flansch (16) und die entsprechende Nut (213) im zweiten radialen Flansch (26) zusammen die Nut (51) für die Dichtung (5) ausbilden,
der erste Flansch (16) einen Vorsprung (18) umfasst, der sich in Richtung eines Umfangs (211) des zweiten Flanschs (26) und zumindest teilweise darüber erstreckt, wobei der Umfang (211) des zweiten Flanschs (26) ein Umfang des zweiten Flanschs (26) ist, der am weitesten von der Mittelachse (A) entfernt ist, die sich durch die Rohrabschnitte (12, 22) und die Flansche (16, 26) erstreckt, so dass der zweite Flansch (26) keinen anderen Teil oder Abschnitt umfasst, der weiter von der Achse (A) entfernt ist als der Umfang (211), in der radialen Richtung (R) gesehen, und
der Vorsprung (18) eine Fläche (181) umfasst, die sich in der radialen Richtung (R) des ersten Flanschs (16) parallel zu der radialen Richtung (R) erstreckt, wobei die Fläche (181) dem Verbindungselement (30) zugewandt ist und ein freies Ende ist, das keinen Kontakt mit irgendeinem anderen Teil der Kopplungsanordnung (1) hat, wenn die Anschlagfläche (19) des ersten Flanschs (16) an der Anschlagfläche (212) des zweiten Flanschs (26) anliegt.

2. Kopplungsanordnung nach Anspruch 1, wobei der erste Übergangsabschnitt (14) einen Radius (R1) von mindestens 2 mm umfasst.

3. Kopplungsanordnung nach Anspruch 1 oder 2, wobei der erste Übergangsabschnitt (14) einen Radius (R1) von 6 mm bis 10 mm umfasst.

4. Kopplungsanordnung nach einem der Ansprüche 1 - 3, wobei der zweite Übergangsabschnitt (24) einen Radius (R2) von mindestens 2 mm umfasst.

5. Kopplungsanordnung nach einem der Ansprüche 1 - 4, wobei der zweite Übergangsabschnitt (24) einen Radius (R2) von 6 mm bis 10 mm umfasst.

6. Kopplungsanordnung nach einem der Ansprüche 1 - 5, wobei sich ein dritter Übergangsabschnitt (34) dort befindet, wo das Verbindungselement (30) in den Innenflansch (36) übergeht, wobei der dritte Übergangsabschnitt (34) in einer Richtung vom Innengewinde (37) zum Innenflansch (36) eine allmählich zunehmende Dicke aufweist.

7. Kopplungsanordnung nach Anspruch 6, wobei der dritte Übergangsabschnitt (34) einen Radius (R3) von mindestens 0,7 mm umfasst.

8. Kopplungsanordnung nach Anspruch 6 oder 7, wobei der dritte Übergangsabschnitt (34) einen Radius (R3) von 1 mm bis 4 mm umfasst.

9. Kopplungsanordnung nach Anspruch 6, wobei der erste Übergangsabschnitt (14) einen Radius (R1) von 7 mm bis 9 mm umfasst, der zweite Übergangsabschnitt (24) einen Radius (R2) von 7 mm bis 9 mm umfasst und der dritte Übergangsabschnitt (34) einen Radius (R3) von 1,5 mm bis 3,5 mm umfasst.

10. Kopplungsanordnung nach einem der Ansprüche 1 - 9, wobei der zweite Flansch (26) einen radialen Ausschnitt (28) umfasst, der die Eingriffsfläche (29) ausbildet.

11. Kopplungsanordnung nach einem der Ansprüche 1 - 10, wobei die Kopplungsanordnung eine hygienische Kopplungsanordnung ist, die angeordnet ist, um ein fluides Lebensmittelprodukt (P) von einem des ersten Rohrabschnitts (12) und des zweiten Rohrabschnitts (22) zum anderen des ersten Rohrabschnitts (12) und des zweiten Rohrabschnitts (22) zu übertragen.

12. Rohrwärmetauscher, umfassend
eine Kopplungsanordnung (1) nach einem der Ansprüche 1 - 11,
ein Lebensmittelförderrohr (102) für ein flüssiges Lebensmittelprodukt,
ein Medienförderrohr (104) für ein Heizmedium, wobei das Medienförderrohr (104) angeordnet ist, um Wärme vom Heizmedium auf das flüssige Lebensmittelprodukt im Lebensmittelförderrohr (102) zu übertragen,
wobei die Kopplungsanordnung (1) zumindest zwei Abschnitte (108, 109) eines jeglichen des Lebensmittelförder- und Medienförderrohrs (102, 104) verbindet.

13. Verfahren zum Übertragen eines fluiden Lebensmittelprodukts (P) durch eine Kopplungsanordnung (1) nach einem der Ansprüche 1 - 11, umfassend
Bereitstellen (42) eines ersten Rohrabschnitts (12), der einen ersten radialen Flansch (16) aufweist, der sich an einem ersten Rohrabschnitt (12) befindet, wobei der erste Flansch (16) ein Außengewinde (17) umfasst, wobei sich dort, wo der erste Rohrabschnitt (12) in den ersten Flansch (16) übergeht, ein erster Übergangsabschnitt (14) befindet, wobei der erste Übergangsabschnitt (14) in einer Richtung vom ersten Rohrabschnitt (12) zum ersten Flansch (16) eine allmählich zunehmende Dicke aufweist, Bereitstellen (44) eines zweiten Rohrabschnitts (22), der einen zweiten radialen Flansch (26) aufweist, der sich am zweiten Rohrabschnitt (22) befindet und dem ersten Flansch (16) zugewandt ist, wobei der zweite Flansch (26) eine Eingriffsfläche (29) umfasst, wobei sich dort, wo der zweite Rohrabschnitt (12) in den zweiten Flansch (26) übergeht, ein zweiter Übergangsabschnitt (24) befindet, wobei der zweite Übergangsabschnitt (24) in einer Richtung vom zweiten Rohrabschnitt (22) zum zweiten Flansch (26) eine allmählich zunehmende Dicke aufweist,
Aufschrauben (46) eines Verbindungselements (30) auf den ersten Flansch (16), wobei das Verbindungselement (30) ein Innengewinde (37), das mit dem Außengewinde (17) des ersten Flanschs (16) in Eingriff steht, und einen Innenflansch (36), der mit der Eingriffsfläche (29) des zweiten Flanschs (26) in Eingriff steht, aufweist, wobei das Verbindungselement (30) dadurch den zweiten Flansch (26) in Richtung des ersten Flanschs (16) drückt, und
Zuführen (48) des fluiden Lebensmittelprodukts (P) unter einem Druck von mindestens 25 bar und mit einer Temperatur von mindestens 110 °C zu einem jeglichen des ersten Rohrabschnitts (12) und des zweiten Rohrabschnitt (22), vorbei an den radialen Flanschen (16, 26) und in den anderen des ersten Rohrabschnitts (12) und des zweiten Rohrabschnitts (22).

14. Verfahren nach Anspruch 13, wobei sowohl der erste Rohrabschnitt (12) als auch der zweite Rohrabschnitt (22) einen Durchmesser und eine Dicke aufweisen und das fluide Lebensmittelprodukt (P) unter einem Druck zugeführt wird, wobei der Durchmesser, die Dicke und der Druck aus einer jeglichen der folgenden Wertegruppen ausgewählt sind:
- ein Durchmesser von 20 mm bis 25 mm, eine Dicke von 1,2 ± 0,5 mm und ein Druck von mindestens 95 bar,
- ein Durchmesser von 25 mm bis 38 mm, eine Dicke von 1,5 ± 0,5 mm und ein Druck von mindestens 65 bar,
- ein Durchmesser von 38 mm bis 51 mm, eine Dicke von 1,6 ± 0,5 mm und ein Druck von mindestens 63 bar,
- ein Durchmesser von 51 mm bis 63,5 mm, eine Dicke von 1,6 ± 0,5 mm und ein Druck von mindestens 47 bar,
- ein Durchmesser von 63,5 mm bis 76 mm, eine Dicke von 1,6 ± 0,5 mm und ein Druck von mindestens 25 bar,
- ein Durchmesser von 76 mm bis 101,6 mm, eine Dicke von 2,0 ± 0,5 mm und ein Druck von mindestens 25 bar und
- ein Durchmesser von 101,6 mm bis 104 mm, eine Dicke von 2,0 ± 0,5 mm und ein Druck von mindestens 25 bar.

## Revendications

1. Agencement d'accouplement comprenant
une première section de tuyau (12) et une première bride radiale (16) qui est située sur la première section de tuyau (12), la première bride (16) comprenant des filets externes (17),
une seconde section de tuyau (22) et une seconde bride radiale (26) qui est située sur la seconde section de tuyau (22) et fait face à la première bride (16), la seconde bride (26) comprenant une surface de mise en prise (29), et
un élément de raccord (30) qui a
des filets internes (37) qui viennent en prise avec les filets externes (17) de la première bride (16), et
une bride interne (36) qui vient en prise avec la surface de mise en prise (29) de la seconde bride (26), l'élément de raccord (30) pressant ainsi la seconde bride (26) vers la première bride (16) lorsque l'élément de raccord (30) est vissé sur la première bride (16),
une première section de transition (14) qui est située à l'endroit où la première section de tuyau (12) devient la première bride (16), la première section de transition (14) ayant une épaisseur augmentant progressivement dans une direction allant de la première section de tuyau (12) vers la première bride (16), et
une deuxième section de transition (24) qui est située à l'endroit où la seconde section de tuyau (12) devient la seconde bride (26), la deuxième section de transition (24) ayant une épaisseur qui augmente progressivement dans une direction allant de la seconde section de tuyau (22) vers la seconde bride (26),
la première bride (16) comprenant une surface de butée (19) qui vient en butée contre une surface de butée (212) de la seconde bride (26), et
un joint (5) étant disposé dans une rainure (51) entre la première bride (16) et la seconde bride (26), une pré-compression prédéfinie du joint (5) étant obtenue par la mise en butée entre les surfaces de butée (19, 212) des brides (16, 26), lorsque la première bride (16) et la seconde bride (26) sont reliées l'une à l'autre,
**caractérisé par**
une rainure (110) située à proximité de la surface de butée (19) de la première bride radiale (16), sur un côté intérieur de la surface de butée (19) vu dans une direction radiale (R), un rebord saillant (111) étant situé à côté de la rainure (110), sur un côté intérieur de la rainure (110) vu dans la direction radiale (R), la seconde bride radiale (26) ayant une rainure correspondante (213) qui est située à proximité de la surface de butée (212) de la seconde bride radiale (26), sur un côté intérieur de la surface de butée (212) vu dans la direction radiale (R), et un rebord saillant (215) situé à côté de la rainure (213), sur un côté intérieur de la rainure (213) vu dans la direction radiale (R),
la rainure (110) dans la première bride radiale (16) et la rainure (213) correspondante dans la seconde bride radiale (26) formant ensemble la rainure (51) pour le joint (5),
la première bride (16) comprenant une saillie (18) qui s'étend vers et au moins partiellement sur une périphérie (211) de la seconde bride (26), ladite périphérie (211) de la seconde bride (26) étant une périphérie de la seconde bride (26) qui est la plus éloignée de l'axe central (A) qui s'étend à travers les sections de tuyau (12, 22) et les brides (16, 26), de sorte que la seconde bride (26) ne comprenne aucune autre partie ou section qui est plus éloignée de l'axe (A) que ladite périphérie (211), vue dans la direction radiale (R), et
la saillie (18) comprenant une surface (181) qui s'étend dans la direction radiale (R) de la première bride (16), parallèlement à ladite direction radiale (R), ladite surface (181) faisant face à l'élément de raccord (30) et étant une extrémité libre qui n'a aucun contact avec une quelconque autre partie de l'agencement d'accouplement (1) lorsque la surface de butée (19) de la première bride (16) vient en butée contre la surface de butée (212) de la seconde bride (26).

2. Agencement d'accouplement selon la revendication 1, la première section de transition (14) comprenant un rayon (R1) d'au moins 2 mm.

3. Agencement d'accouplement selon la revendication 1 ou 2, la première section de transition (14) comprenant un rayon (R1) de 6 mm à 10 mm.

4. Agencement d'accouplement selon l'une quelconque des revendications 1 à 3, la deuxième section de transition (24) comprenant un rayon (R2) d'au moins 2 mm.

5. Agencement d'accouplement selon l'une quelconque des revendications 1 à 4, la deuxième section de transition (24) comprenant un rayon (R2) de 6 mm à 10 mm.

6. Agencement d'accouplement selon l'une quelconque des revendications 1 à 5, une troisième section de transition (34) étant située à l'endroit où l'élément de raccord (30) devient la bride interne (36), la troisième section de transition (34) ayant une épaisseur augmentant progressivement dans une direction allant des filets internes (37) vers la bride interne (36).

7. Agencement d'accouplement selon la revendication 6, la troisième section de transition (34) comprenant un rayon (R3) d'au moins 0,7 mm.

8. Agencement d'accouplement selon la revendication 6 ou 7, la troisième section de transition (34) comprenant un rayon (R3) de 1 mm à 4 mm.

9. Agencement d'accouplement selon la revendication 6, la première section de transition (14) comprenant un rayon (R1) de 7 mm à 9 mm, la deuxième section de transition (24) comprenant un rayon (R2) de 7 mm à 9 mm, et la troisième section de transition (34) comprenant un rayon (R3) de 1,5 mm à 3,5 mm.

10. Agencement d'accouplement selon l'une quelconque des revendications 1 à 9, la seconde bride (26) comprenant une découpe radiale (28) qui forme la surface de mise en prise (29).

11. Agencement d'accouplement selon l'une quelconque des revendications 1 à 10, l'agencement d'accouplement étant un agencement d'accouplement sanitaire qui est conçu pour transférer un produit alimentaire fluide (P) de l'une parmi la première section de tuyau (12) et la seconde section de tuyau (22) à l'autre parmi la première section de tuyau (12) et la seconde section de tuyau (22).

12. Échangeur de chaleur tubulaire comprenant
un agencement d'accouplement (1) selon l'une quelconque des revendications 1 à 11,
un tube de transport d'aliments (102) pour un produit alimentaire liquide,
un tube de transport de milieu (104) pour un milieu chauffant, le tube de transport de milieu (104) étant conçu pour transférer la chaleur du milieu chauffant au produit alimentaire liquide dans le tube de transport d'aliments (102),
l'agencement d'accouplement (1) reliant au moins deux sections (108, 109) de l'un quelconque des tubes de transport d'aliments et de milieu (102, 104).

13. Procédé de transfert d'un produit alimentaire fluide (P) à travers un agencement d'accouplement (1) selon l'une quelconque des revendications 1 à 11, comprenant les étapes consistant à
fournir (42) une première section de tuyau (12) qui a une première bride radiale (16) qui est située sur la première section de tuyau (12), la première bride (16) comprenant des filets externes (17), une première section de transition (14) étant située à l'endroit où la première section de tuyau (12) devient la première bride (16), la première section de transition (14) ayant une épaisseur augmentant progressivement dans une direction allant de la première section de tuyau (12) vers la première bride (16),
fournir (44) une seconde section de tuyau (22) qui a une seconde bride radiale (26) qui est située sur la seconde section de tuyau (22) et fait face à la première bride (16), la seconde bride (26) comprenant une surface de mise en prise (29), une deuxième section de transition (24) étant située à l'endroit où la seconde section de tuyau (12) devient la seconde bride (26), la deuxième section de transition (24) ayant une épaisseur augmentant progressivement dans une direction allant de la seconde section de tuyau (22) vers la seconde bride (26),
visser (46) un élément de raccord (30) sur la première bride (16), l'élément de raccord (30) ayant des filets internes (37) qui viennent en prise avec les filets externes (17) de la première bride (16), et une bride interne (36) qui vient en prise avec la surface de mise en prise (29) de la seconde bride (26), l'élément de raccord (30) pressant ainsi la seconde bride (26) vers la première bride (16), et
fournir (48) le produit alimentaire fluide (P) à une pression d'au moins 25 bars et à une température d'au moins 110 °C à l'une quelconque parmi la première section de tuyau (12) et la seconde section de tuyau (22), au-delà des brides radiales (16, 26) et dans l'autre parmi la première section de tuyau (12) et la seconde section de tuyau (22).

14. Procédé selon la revendication 13, chacune de la première section de tuyau (12) et de la seconde section de tuyau (22) ayant un diamètre et une épaisseur, et le produit alimentaire fluide (P) étant fourni à une pression, le diamètre, l'épaisseur et la pression étant choisis parmi l'un quelconque des groupes de valeurs suivants :
un diamètre de 20 mm à 25 mm, une épaisseur de 1,2 ±0,5 mm et une pression d'au moins 95 bars,
un diamètre de 25 mm à 38 mm, une épaisseur de 1,5 ±0,5 mm et une pression d'au moins 65 bars,
un diamètre de 38 mm à 51 mm, une épaisseur de 1,6 ±0,5 mm et une pression d'au moins 63 bars,
un diamètre de 51 mm à 63,5 mm, une épaisseur de 1,6 ±0,5 mm et une pression d'au moins 47 bars,
un diamètre de 63,5 mm à 76 mm, une épaisseur de 1,6 ±0,5 mm et une pression d'au moins 25 bars,
un diamètre de 76 mm à 101,6 mm, une épaisseur de 2,0 ±0,5 mm et une pression d'au moins 25 bars, et
un diamètre de 101,6 mm à 104 mm, une épaisseur de 2,0 ±0,5 mm et une pression d'au moins 25 bars.
